# EUROPEAN PATENT APPLICATION

(11) **EP 4 524 757 A1**
(43) Date of publication of application: **19.03.2025**
(21) Application number: 24195940.2
(22) Date of filing: 22.08.2024
(51) Int. Cl.: G06F 12/14, G06F 21/79, G06F 12/08, G06F 12/109

(54) **SECURING PAGED MEMORY WITH TAGS**

(30) Priority: 12.09.2023 US 202318465905
(71) Applicant: Avago Technologies International Sales Pte. Limited, Singapore 768923 (SG)
(72) Inventor: Herrick, Jason, Pleasanton, 94588 (US); Neuman, Darren, Palo Alto, 94301 (US)
(74) Representative: Dilg, Haeusler, Schindelmann Patentanwaltsgesellschaft mbH

(57) **Abstract**

Solutions that can provide secure access to memory. Some solutions assign tags to pages of memory and ensure secure access to each page of memory by ensuring that a client seeking to access a tagged page of memory is authorized to access pages marked by that tag.

## Description

### Technical Field

This disclosure is related generally to the field of memory management and more specifically to tools and techniques for providing secure access to system memory.

### Background

In most computers, the operating system controls access to system memory. In some cases, this is not appropriate, and additional security is required. Often, however, attempting to secure memory locations, and in particular pages of paged memory, imposes significant latency issues. This latency can be problematic in many applications, including video delivery. A set-top box, for example, needs to be able to provide video output that meets fairly rigorous latency requirements. On the other hand, many set-top boxes are required to handle content that has fairly stringent security requirements as well, including content protected by digital rights management (DRM) technology. In that environment, several different clients, including without limitation, video and/or audio decoders, devices connected via USB, Ethernet, and/or PCIe ports, direct memory access (DMA) (e.g., from Universal Asynchronous Receiver-Transmitter (UART) devices, flash memory devices, etc.), software or firmware running on an untrusted processor, and the like, often need (or request) low-latency access to memory pages to maintain acceptable performance, but the system also needs to ensure that each client has access only to memory pages that client is authorized to access.

Thus, there is a need for a system that can enforce high levels of security while still providing low latency access to the paged memory.

### Brief Description of the Drawings

Fig. 1 is a block diagram illustrating example components of a device in accordance with some embodiments. Fig. 2 is a block diagram illustrating a secure environment of a device, in accordance with some embodiments.
[0006]Fig. 3 is a functional diagram that illustrates functions of a secure memory access unit, in accordance with some embodiments.
Fig. 4 is a process flow diagram that illustrates a method of providing secure access to memory pages, in accordance with some embodiments.
Fig. 5 is a process flow diagram that illustrates a method of providing secure access to memory pages, in accordance with some embodiments.

### Detailed Description

A set of embodiments provides devices that can enforce secured access to pages of memory. As described in further detail below, various embodiments can provide many benefits over conventional techniques. Some embodiments can provide high levels of memory security. For example, some embodiments employ an independent trusted client in a secure memory access unit to secure paged memory without relying on the operating system to handle access permissions. Some embodiments can provide real-time access (i.e., access within a fixed deadline) to paged memory without the latency inherent to other memory protection schemes. Some embodiments can work with fully fragmented paged memory, in which pages do not comprise consecutive blocks of memory; no matter how fragmented memory becomes, each page still can be associated with a tag, which can be used to look up permission vectors for that page. Some embodiments can employ additional access parameters (which, in some cases, are provided by clients) to fine-tune security and access to particular pages available to such clients.

Devices in accordance with one set of embodiments include set-top boxes and/or computing systems and devices. As used herein, the term "set-top box" means any device that is designed to provide video decoding, decryption, processing functions and/or the like on an encoded input stream and provide a decoded output stream to a display device, such as a television set, projector, monitor, and/or the like. Examples of set-top boxes include, but are not limited to, cable television set-top boxes, satellite television set-top boxes, (Internet Protocol television (IPTV)/streaming set-top boxes (like a Roku device, an Apple TV, a Google Chromecast, etc.), any combination thereof, and/or the like.

Devices in accordance with other embodiments can serve as components of set-top boxes or computing devices. Such components can include, without limitation memory managers, memory controllers, memory management units (MMU), systems on a chip (SoC) that provide memory access and other functionality for set-top boxes, and the like. Various embodiments, however, are not limited to these devices and can include any device that provides secure access to paged memory.

As used herein, the term "paged memory" means memory that is allocated in pages of a specified size (e.g., 4Kb). Paged memory is physical memory allocated from system memory (e.g., dynamic random-access memory (DRAM)). A "memory page" or "page of memory" thus means a page of memory that has been allocated from the system heap (*i.e.,* a block of unused system memory that is available for allocation).

In an aspect, some embodiments assign a tag to each memory page and use this tag to allow or deny memory access. For example, an embodiment might allocate pages from a memory heap and mark each page with a tag when allocated. (As used herein, the terms "mark" a page with a tag and "assign" a tag to a page are used synonymously to mean creating an association between a page and a tag.) In some cases, when a client later requests access to that page, the device then can determine whether that client has access to the page based on the tag and can allow or deny access to that memory page on that basis.

As used herein, the term "client" means any hardware or firmware device, software process, and/or processor executing such a process, that has (or requests) access to the system DRAM. Examples of clients can include, without limitation, a processor executing an operating system and/or an application in software or firmware, a hardware client, a video or audio decoder (which could be implemented by software, firmware and/or hardware), a device connected via USB, Ethernet, and/or PCIe ports, direct memory access (DMA) (e.g., from Universal Asynchronous Receiver-Transmitter (UART) devices, flash memory devices, etc.) and/or the like. In some embodiments, clients can be classified as either a trusted (or secure) client or an untrusted client. An "untrusted" client is any client that is not a trusted client. As used herein, a "trusted" or "secure" client is a client (which might be hardware, software, and/or firmware) with privileged access to the system DRAM. In an aspect, a secure client is hardened against interference, modification, or attack by untrusted clients or devices.

In some embodiments, the device might be configured with various forms of protection for the secure client. For example, the secure client might be created during the manufacture of the device with a limited set of functionality (including functionality to add, modify or delete tags and access controls to memory, as described herein) that cannot be modified after manufacture. Alternatively and/or additionally, the secure client might operate in a secure environment that is inaccessible to other entities (hardware, firmware, or software) or that has strict controls placed on such access, such as a secure enclave, a hardware security module, a trusted platform module, a secure element/hardware root of trust, and/or the like. In a particular embodiment, the secure client can be software executing on a secure processor, as described in further detail below. In some embodiments, hardware or firmware, such as circuitry in a memory manager, memory controller, MMU, SoC, etc. might function as the secure client. In any case, the secure client is trusted with direct access to system memory and generally functions to protect the system DRAM by configuring access to the system DRAM, as described further below.

A "tag" can be any identifier that the device uses to identify one or more particular pages of memory and that can be used to authenticate or authorize a device to access that page. A tag can be associated with a particular client, a particular type of data stored in a memory page, a particular process, and/or any other identifying feature of the page that can be used to discriminate between one client and another when determining access to a given memory page. Merely by way of example, all pages allocated for a Client A could be marked with a tag labeled "XYZ." When Client A attempts to access a page, the device could identify the XYZ tag assigned to that page, determine that Client A is authorized to access pages marked with the XYZ tag, and provide Client A with access. If Client B tried to access the same page, the device could identify the XYZ tag, determine that Client B is not authorized to access pages marked with the XYZ tag and deny access to that page.

In another example, pages holding a particular type of data might be marked with a tag "ABC." When either Client A or Client B attempts to access a page marked with ABC, the device might determine that pages marked with that tag can be accessed by both Client A and Client B and allow access by either client. Perhaps, however, Client A is authorized to read or write to the page, but Client B is authorized only to read that page. In that case, if Client B requests read access, the device will grant access, but if Client B requests write access to the page, the device will deny access. In some embodiments, the tags can have a one-to-many relationship with pages, such that multiple pages can be marked with the same tag, indicating that the same access controls apply to each such page. In other embodiments, the tags and pages might have a one-to-one relationship, such that each page is marked with its own distinct tag.

Thus, as discussed in further detail below, embodiments can employ a number of different strategies and/or criteria to determine whether to grant or deny a client access to pages with assigned tags. These techniques can provide a flexible framework to enforce strong security for memory pages while still allowing low-latency access to those pages.

Various embodiments provide systems, devices, and methods for securing access to paged memory. For example, a set-top box in accordance with one set of embodiments might comprise one or more processors, including a secure processor. The set-top box might further comprise a set of instructions encoded on a non-transitory computer readable medium and executable by the secure processor.

The set of instructions might comprise instructions to store a plurality of tags in a page table in a secure random-access memory (RAM) of the set-top box. In some embodiments, each one of the plurality of tags can be assigned to a different one of a plurality of memory pages in a system dynamic RAM (DRAM) of the set-top box. The plurality of tags can comprise a first tag assigned to a first memory page.

The memory manager might comprise circuitry to store the plurality of tags in the secure RAM, circuitry to receive an access request from an untrusted client for access to the first memory page, and/or circuitry to identify the first tag assigned to the first memory page. The memory manager might further comprise circuitry to determine whether the untrusted client is authorized to access the memory page, based at least in part on the first tag. In some embodiments, the memory manager comprises circuitry to provide the untrusted client with access to the memory page based at least in part on a determination that the untrusted client is authorized to access the memory page.

A device in accordance with another set of embodiments can comprise logic (e.g., hardware and/or firmware, software instruction executing on a processor, etc.) to store a plurality of tags in a page table random access (RAM). Each one of the plurality of tags might be assigned to a different one of a plurality of memory pages in a system dynamic RAM (DRAM). The plurality of tags can comprise a first tag assigned to a first memory page.

In some embodiments, the device comprises logic to receive an access request from a client for access to the first memory page and logic to identify the first tag assigned to the first memory page. In some cases, the device might include the system RAM (e.g., if the device is a computing system, set-top box, etc.). In other cases, the system RAM might be external to the device, (e.g., if the device is a memory manager, memory management unit (MMU), SoC, etc. within a larger system). Likewise, a client can be incorporated within the device or can be external to the device. In either case, the logic of the device can control client access to the system RAM as described further herein.

The device might further comprise logic to determine whether the client is authorized to access the memory page, e.g., based at least in part on the first tag. The device can also comprise logic to provide the client with access to the memory page, based at least in part on a determination that the client is authorized to access the memory page. In accordance with different embodiments, there are a variety of ways the device can make this determination, as described in further detail below.

Some embodiments provide methods, including without limitation methods of providing secure access to memory. An exemplary method can comprise storing, e.g., in a page table random access (RAM), a plurality of tags. Each one of the plurality of tags can be assigned to a different one of a plurality of memory pages in a system dynamic RAM (DRAM); the plurality of tags might comprise a first tag assigned to a first memory page. The method can further comprise receiving an access request from a client for access to the first memory page and/or identifying the first tag assigned to the first memory page. In some cases, the method comprises determining whether the client is authorized to access the memory page, based at least in part on the first tag and/or providing the client with access to the memory page, for example, based at least in part on a determination that the client is authorized to access the memory page.

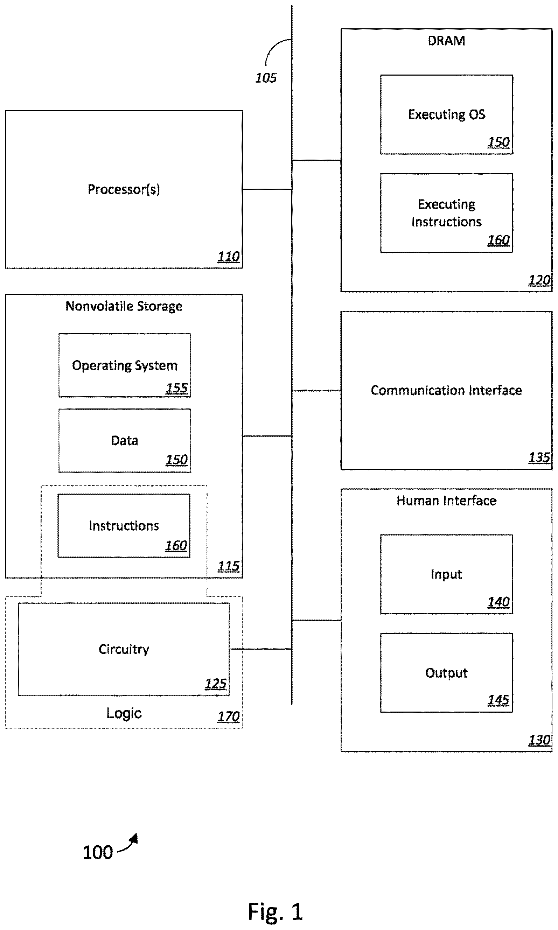

Turning to the figures, Fig. 1 is a block diagram illustrating an example of a device 100, which can function as described herein, including without limitation serving as a device, set-top box, computer system, or the like (or a component of any of these), in accordance with various embodiments, and/or performing some or all operations of the methods described herein. For instance, in some cases, the device 100 might function as a SoC that provides video decoding and processing functionality for a larger device, such as a set-top box or computer system. No component shown in Fig. 1 should be considered necessary or required by each embodiment. For example, many embodiments may not include a processor and/or might be implemented entirely in hardware or firmware circuitry. Similarly, many embodiments may not include input devices, output devices, or network interfaces.

With that prelude, as shown in Fig. 1, the device 100 may include a bus 105. The bus 105 includes one or more components that enable wired and/or wireless communication among the components of the device 100. The bus 105 may couple together two or more components of Fig. 1, such as via operative coupling, communicative coupling, electronic coupling, and/or electric coupling. Such components can include a processor 110 non-volatile storage 115, working memory (*e.g.,* system dynamic random-access memory (DRAM) 120), and/ or circuitry 125. The system DRAM can be any memory that is available for general use in the device 100, as contrasted, for example, with the secure RAM described below, which is reserved for special purposes in accordance with some embodiments. In some cases, the system 100 can include human interface components 130 and/or a communication interface 135.

While these components are displayed as integrated within the device 100, certain components might be located external from the device 100. As such, the device 100 might include, instead of or in addition to the components themselves, facilities for communicating with such external devices, which therefore can be considered part of the device 100 in some embodiments.

Merely by way of example, the non-volatile storage 115 can include a hard disk drive (HDD), a solid-state drive (SSD), and/or any other form of persistent storage (*i.e.,* storage that does not require power to maintain the state of the stored data). While such storage often is incorporated within the device 100 itself, such storage might be external to the device 100 and can include external HDD, SSD, flash drives, or the like, as well as networked storage (*e.g.,* shared storage on a file server, etc.), storage on a storage area network (SAN), cloud-based storage, and/or the like. Unless the context dictates otherwise, any such storage can be considered part of the device 100 in accordance with various embodiments.

Similarly, the human interface 30 can include input components 140 and/or output components 145, which can be disposed within the device 100, external to the device 100, and/or combinations thereof. The input components 140 can enable the device 100 to receive input, such as user input and/or sensed input. For example, the input components 140 may include a remote control, touch screen, a keyboard, a keypad, a mouse, a button, a microphone, a switch, a sensor, a global positioning system sensor, an accelerometer, a gyroscope, an actuator, and/or the like. In some cases, such components can be external to the device 100 and/or can communicate with components internal to the device 100, such as input jacks, USB ports, Bluetooth radios, and/ or the like. Similarly, the output component 145 can enable the device 100 to provide output, such as via a display, a printer, a speaker, and/or the like, any of which can be internal to the device 100 and/or external to the device but in communication with internal components, such as a USB port, a Bluetooth radio, a video port, and/or the like. Again, unless the context dictates otherwise, any such components can be considered part of the device 100 in accordance with various embodiments.

From these examples, it should be appreciated that various embodiments can support a variety of arrangements of external and/or internal components, all of which can be considered part of the device 100. In certain embodiments, some or all of these components might be virtualized; examples can include virtual machines, containers (such as Docker containers, etc.), cloud computing environments, platform as a service (PAAS) environments, and/or the like.

In an aspect, the nonvolatile storage 115 can be considered a non-transitory computer readable medium. In some embodiments, the nonvolatile storage 115 can be used to store software and/or data for use by the device 100. Such software/data can include an operating system 150, data 155, and/or instructions 160. The operating system can include instructions governing the basic operation of the device 100 and can include a variety of personal computer or server operating systems, embedded operating systems, and/or the like, depending on the nature of the device 100. The data 155 can include any of a variety of data used or produced by the device 100 (and/or the operation thereof), such as media content, databases, documents, and/or the like. In some cases, the nonvolatile storage can hold cached pages of virtual memory as well. The instructions 160 can include software code, such as applications, object code, assembly, binary, etc.) used to program the processor 110 to perform operations in accordance with various embodiments. In an aspect, the operating system 150 can be considered part of the instructions 160 in some embodiments.

The processor 110 can include one or more of a central processing unit, a graphics processing unit, a microprocessor, a controller, a microcontroller, a digital signal processor (DSP), programmable logic (such as a field-programmable gate array (FPGA) an erasable programmable logic device (EPLD), or the like), an application-specific integrated circuit (ASIC), a system on a chip (SoC) and/or another type of processing component. The processor 110 can be implemented in hardware, firmware, or a combination of hardware, firmware and/or software. Merely by way of example, the processor 110 might have multiple processors and/or multiple cores, some or all of which might be general-purpose (*e.g.,* CPU) processors and/or cores, and some or all of which might be special-purpose processors and/or cores (including, for example, graphics processors and/or cores, neural processors and/or cores, and/or secure processors and/or cores). A secure processor can be any type of processor 110 that is designed to run in a secure environment, executes a set of instructions that is limited to security and/or cryptographic functions, and/or is hardened against malicious attacks, physical tampering, etc. Examples of secure processors or cores can include the ARM SecureCore series, the Apple Secure Enclave, the Microsoft Pluton processor, and/or the like. In some implementations, the processor 110 includes one or more processors and/or cores capable of being programmed to perform one or more operations or processes described elsewhere herein.

For example, in some embodiments, the device 100 can comprise logic 170. Such logic can be any sort of code, instructions, circuitry, or the like that can cause the device 100 to operate in accordance with the embodiments herein (*e.g.,* to perform some or all of the processes and/or operations described herein). Merely by way of example, the logic 170 can include the instructions 160, which might be stored on the nonvolatile storage 115 as noted above, loaded into system DRAM 120, and/or executed by the processor 110 to perform operations and methods in accordance with various embodiments. In an aspect, these instructions 160 can be considered to be programming the processor 110 to operate according to such embodiments. In the same way, the operating system 150 (to the extent it is discrete from the instructions 160) might be stored on the nonvolatile storage 110, loaded into system DRAM 120, and/or executed by a processor 110.

Alternatively, and/or additionally, the logic 170 can include the circuitry 125 (*e.g.,* hardware or firmware), which can operate independently of, or collaboratively with, any processor 110 the device 100 might or might not have. (As noted above, in some cases, the circuitry 150 itself can be considered a processor 110.) The circuitry 125 might be embodied by a chip, SoC, ASIC, programmable logic device (FPGA, EPLD, etc.), and/or the like. Thus, some or all of the logic enabling or causing the performance of some or all of the operations described herein might be encoded in hardware or firmware circuitry (*e.g.,* circuitry 150) and executed directly by such circuitry, rather than being software instructions 160 loaded into system DRAM 120. (In some cases, this functionality can be embodied by hardware instructions). Thus, unless the context dictates otherwise, embodiments described herein are not limited to any specific combination of hardware, firmware, and/or software.

The device 100 can also include a communication interface 135, which can enable the device 100 to communicate with other devices via a wired (electrical and/or optical) connection and/or a wireless (RF) connection. For example, the communication interface 160 may include one or more RF systems (such a Bluetooth system, a Wi-Fi system, a 5G or cellular system, etc.). Some such systems can be implemented in combination, as discrete chips, as SoCs, and/or the like. The communication interface 135 can further include a modem, a network interface card, and/or an antenna. In some cases, the communication interface 130 might comprise a plurality of I/O ports, each of which can be any facility that provides communication between the device 100 and other devices; in particular embodiments, such ports can network ports, such as Ethernet ports, fiber ports, etc. Merely by way of example, when the device 100 functions as a set-top box, the communication interface 130 might include one or more coaxial (e.g., RG58) ports, one or more ethernet ports, one or more high-definition multimedia interface (HDMI) ports, and/or the like. Other embodiments can include different types of I/O ports, such as serial ports, pinouts, and/or the like. Depending on the nature of the device 100, the communication interface 135 can include any standard or proprietary components to allow communication as described in accordance with various embodiments.

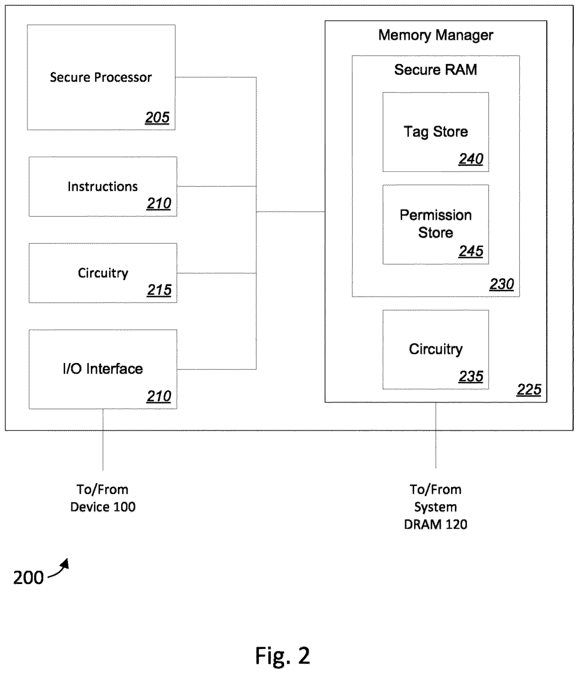

Fig. 2 illustrates a secure environment 200 in accordance with some embodiments. A secure environment can be any device or collection of devices that permits only limited interaction with other components of the device 100 and is designed to provide secure access to the system DRAM 120. In a set of embodiments, the secure environment 200 might be a component of device 100. For example, the secure environment 200 might be a SoC that serves as a processor 110 (alone and/or alongside other processors 110) in the device 100, and/the secure environment 200 might comprise a portion of such a SoC, which might provide various set-top box functionality (*e.g.,* network communications, video processing, etc.) and include other circuitry, processors, or software, etc. (some of which can function, for example, as various untrusted clients, such as a decoder, etc., along with, perhaps, other untrusted clients in the device 100). Additionally and/or alternatively, the secure environment 200, on its own, can provide the functionality of some embodiments and/or can include logic to also perform some or all of the operations described herein, apart from any functionality performed by a larger device in which the secure environment 200 is used.

In some embodiments, the secure environment 200 includes a secure processor 205, which might comprise one or more cores of a more general processor, might operate alongside another processor (not shown in Fig. 2), and/or might operate alone. In some embodiments, any processor (*e.g.,* processor 110) that is not a secure processor is considered an untrusted processor, and any task (*e.g.,* application, operating system, etc.) operating on an untrusted processor might be treated as an untrusted client. The secure processor 205 might execute a set of instructions 210 that cause the secure processor to act as a secure client and/or perform various operations in accordance with various embodiments. In other embodiments, circuitry 215 might include hardware or firmware functions that can function as a secure client and perform other such operations.

In some respects, operating the secure client from hardware can be considered a relatively secure configuration because it prevents any changes to the secure client. In other aspects, executing the secure client as software on the secure processor 205 can provide more flexibility in the operation of the secure client but might be relatively less secure than a hardware secure client (although significantly more secure than software running on an untrusted processor). Operating the secure client with firmware can provide a balance between hardware and software in terms of flexibility and security. Hardware or firmware might also provide better performance than a software secure client. The choice of these options is discretionary among various embodiments.

The secure environment 200 can also include an input/output (I/O) interface 220 (*e.g.,* an I/O pad, etc.) that can provide communication with the device 100 and/or various components thereof, such as the bus 105 and/or system DRAM 120. In some embodiments, the secure environment 200 can have a memory manager 225. As described below, the memory manager 225 can include its own on-chip secure RAM 230, which can contain a tag store 240 that stores tags assigned to memory pages, in accordance with various embodiments and/or a permission store 245, which stores permission vectors in accordance with various embodiments. The memory manager 225 might also include circuitry 235 (*e.g.,* hardware or firmware) that includes logic to perform various operations as described herein.

The memory manager 225 can be any device that can control access to the system DRAM 120 of the device 100 and, in particular, can perform some or all of the secure memory access functionality described herein. In some embodiments, the memory manager can be a memory controller and/or can include some or all of the functionality of a memory controller, but the memory manager 225 and need not be limited to functionality of conventional memory controllers. For example, the memory manager 225 might include some or all of the functionality of a memory management unit (MMU). Further, the memory manager 225 need not be a discrete device but may instead include components that are integrated directly into the secure environment 200.

In accordance with various embodiments, the memory manager 225 can take any form, so long as it is capable of performing the functions ascribed to it herein. By the same token, while secure environment 200 can be a discrete device, some embodiments do not require the secure environment 200; instead, the components and/or functionality thereof might be incorporated directly into device 100.

In general, the devices and components of Figs. 1 and 2 are provided for exemplary purposes only, and none of those devices or components should be considered required of every embodiment; various embodiments can have many different hardware and software arrangements, so long as they can provide the functionality described herein.

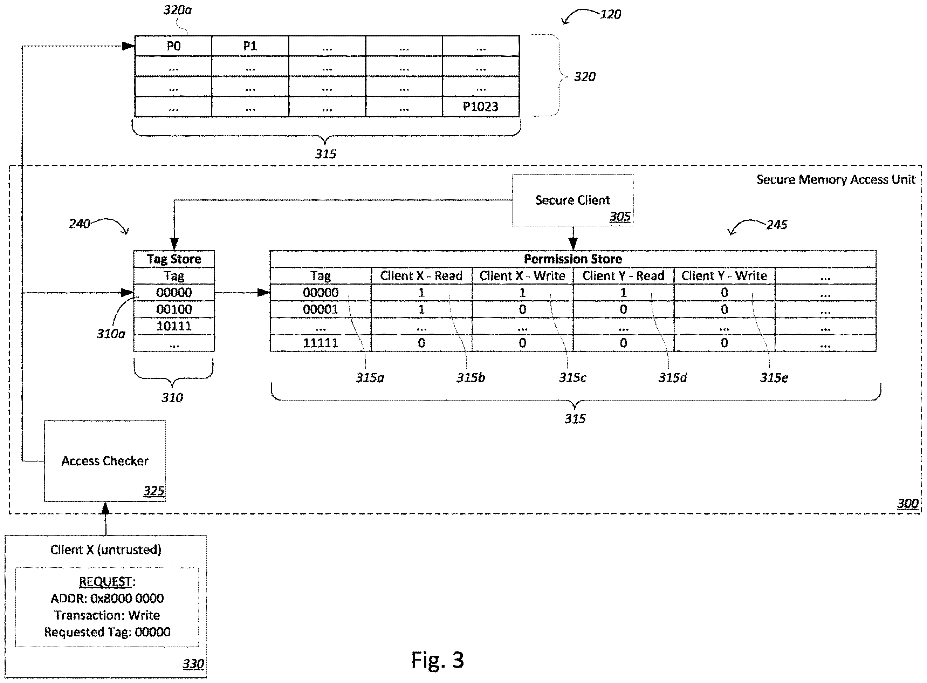

Fig. 3 is a logical block diagram illustrating functional/logical components of a secure memory access unit 300. The secure memory access unit 300, in some embodiments, can be implemented by one or more components of the secure environment 200. The secure memory access unit 300 comprises a secure client 305, which, as noted above, can be implemented as software or firmware (*e.g.,* instructions executing on secure processor 205) and/or as hardware (*e.g.,* implemented in circuitry 215 or 235). In some embodiments, the secure client is trusted with direct access to the system DRAM 120 and other components of the system 100, the secure environment 200, the memory manager 225, etc. to govern the access controls for untrusted clients (*e.g.,* Client X 330), for example by managing (e.g., adding, removing, modifying, etc.) entries in the tag store 240 and/or the permission store 245. In effect, the secure client programs the secure access unit 300 to perform in accordance with various embodiments, assigning tags, changing permission vectors when needed, etc. Thus, in another aspect, the secure client 305 can manage the tag store 240 and/or the permission store 245.

In the embodiment illustrated by Fig. 3, the system DRAM comprises 1024 allocatable memory pages 320. The tag store 240 comprises a plurality of entries (rows) 310, with each entry 310 including a 5-bit tag assigned to a memory page 320; while not shown to scale in Fig. 3, it is contemplated that the tag store would have 1024 entries 310 to correspond to the 1024 memory pages 320 in system DRAM 120. (it should be noted that all field dimensions mentioned herein are merely exemplary, and various embodiments can support field dimensions of any suitable size.). In an aspect, the entries in the tag store can be addressed using the same memory addresses used to address a page in the system DRAM 120. In some embodiments, the same tag (*e.g.,* "00000") can be assigned to multiple memory pages 320.

The permission store 245 also can have a plurality of rows; in an aspect, the plurality of rows can include one row for each tag (*e.g.,* 00000 to 11111) that can be assigned to a memory page; thus, in an embodiment as discussed above, the permission store 245 would include 32 rows if drawn to scale, and a first column might store these tags. The permission store 245 might also include one or more columns corresponding to each client (and, in particular, each untrusted client) that potentially might access any memory pages 320. The exemplary permission store 245 shown in Fig. 3 includes two columns for each client - a first column containing read permission vectors for that client and a second column containing write permission vectors for that client. Thus, in Fig. 3 each row contains a plurality of fields 315, some or all of which can store one or more permission vectors for various clients; for example, as illustrated, field 315a stores a tag ("00000") assigned to a memory page, one or more field (*e.g.,* 315b, 315c) might store permission vectors(s) for a particular client (in this case, Client X), while one or more other fields (*e.g.,* 315d, 315e) can store permission vector(s) for another client (in this case, Client Y).

Thus, as illustrated by Fig. 3, a permission store might store a plurality of fields holding permission vectors for each client. Merely by way of example, the permission store 245 includes a field (*e.g.,* 315b, 315d) storing a read permission vector for each client, and a field (*e.g.,* 315c, 315c) storing a write permission vector for each client. Thus, in some embodiments, the permission vector stored in each field 315b-d can specify whether particulate client (identified by column of the field) is authorized to perform a particular transaction (also identified by the column of the field) the memory page marked by the tag identified by the row of that field. To illustrate, field 315b stores a permission vector specifying whether Client X is authorized to read all memory pages marked with the "00000" tag (as identified by field 315a), and field 315c stores a permission vector specifying whether Client A is authorized to write to that all memory pages marked with "00000" tag. In this case, the value of each permission vector is "1", indicating (in some embodiments), that Client X is authorized both to read from pages marked with the "00000" tag. By the same token fields 315d and 315e can store the same permission vectors respectively, for Client Y; as illustrated, the values of those permission vectors ("1" and "0," respectively) specify (in some embodiments) that Client Y is authorized to read from pages marked with tag "00000" but not to write to those pages. As shown, every row can include similar fields holding the permission vectors for the same clients and operations, but in relation to other tags (and, as noted, there can be a row for each tag assigned by the system, *e.g.,* 00000-11111).

In various embodiments, the permission store 240 can include two (or any number of) columns for every client registered with the system. In some embodiments, for example, the permission store might include one or more vectors for trusted clients as well as untrusted clients so that every client has permission vector(s). Trusted clients could be given read and write permission to all pages, and/or the system might provide various levels of trust, where trusted clients are given access to most pages of memory, but not all, with some pages of memory accessible to only the most secure clients. In other embodiments, a permission store might include columns only for untrusted clients, for some but not all clients, etc.).

In some embodiments, a permission vector can be a 1-bit value indicating whether the operation is allowed or denied; for instance, as shown in Fig. 3, a value of 0 might indicate that the client is not authorized to perform the specified operation on pages marked with the tag (as specified by the column and row, respectively of the permission vector) and a value of 1 might specify that the client is authorized to perform the action on pages marked with that tag (or vice versa). The exemplary tag store 240 and permission store 245 are provided merely by way of example, and embodiments can include different arrangements. Neither those components nor anything in Fig. 3 should be considered limiting.

The secure memory access unit 300 might also comprise an access checker 325. The access checker 325 can be any component or function (physical or logical) that can perform one or more operations as part of a process to determine whether a particular client, *e.g.,* 330 can access a particular memory page, *e.g.,* 320a. The implementation of the access checker 325 is discretionary; for instance, in some embodiments, the access checker 325 can be implemented as a function of the secure client 305, circuitry 215, and/or circuitry 235. More generally, in some embodiments, the access checker 325 can provide an interface between an untrusted client 330 and the system DRAM 120. In an aspect, for example, the access checker 325 can comprise logic to receive an access request from, *e.g.,* an untrusted client 330 and perform one or more operations to determine whether to provide the untrusted client 330 with access to one or more requested memory pages 320. In some embodiments, the access checker 325 accesses the tag store 240 and/or the permission store 245 to make this determination.

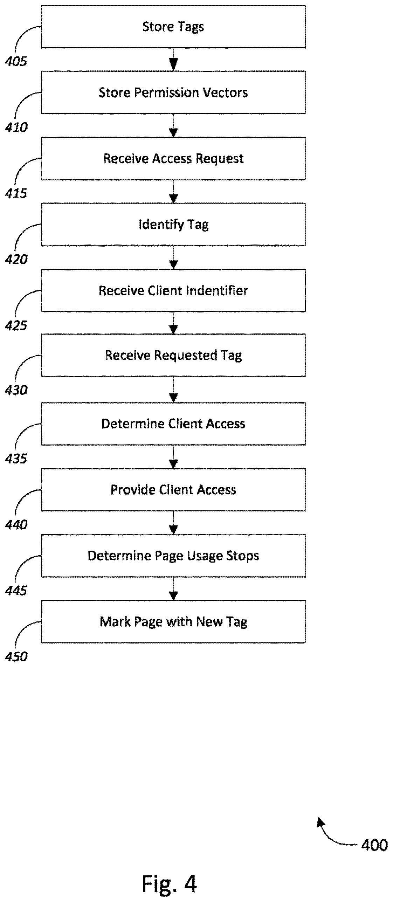

While the description of Fig. 4 (below) explains some of these procedures in detail, Fig. 3 provides a concise illustration of the operation of the secure memory access 300 unit in accordance with some embodiments. Client A 330 is shown in Fig. 3 requesting access to a memory page. The request specifies a memory address (Addr. A), which addresses memory page P0 320a. The request further specifies that the desired transaction is a write transaction, and the request includes a requested tag (Tag A). (An access request need not include all those parameters, but as described further herein, those parameters can be used to provide more fine-grained access control).

In Fig. 3, the access checker 325 receives the request, locates the requested page ("P0" 320a) using the provided address ("0x8000 0000") and also identifies the entry 310a for the tag ("00000") using the same address. Using the tag ("00000") stored in the identified entry 310a of the tag store, the access checker 325 can determine the applicable row of the permission store to evaluate (as shown by the arrow between field 310a and field 315a). From there, the access checker 325, using the identity of the requesting client (Client X) and, in some cases, the nature of the transaction requested (a write transaction), can identify the appropriate permission vector by reading the appropriate field 315c. The value of that permission vector serves as an access control, and using that value, the access checker 325 can determine whether Client X is authorized to access the memory page as requested. In this example, as noted above, the value of the permission vector is "1," indicating that Client X is authorized to write to page "P0." As described below, based at least in part on that determination, the access checker 325 can provide Client X with access to memory page "P0."

As mentioned above, however, in this particular example, Client X also provided a requested tag ("00000") with its access request. As an additional procedure of some implementations, the access checker 325 can determine whether that requested tag matches the tag assigned to the requested page 320a. In this example, the requested tag ("00000") does match the assigned tag ("00000"), as identified by the entry 310 referenced by the address ("0x8000 0000")) provided in the request. In this example, therefore, if the value of the permission vector allowed the requested operation, the access checker 325 would provide access. If Client X's request, however, had included a different requested tag (*e.g.,* "00011"), that tag would not have matched the assigned tag, and the access checker 325, in some embodiments, therefore would not have provided access to the page 320, regardless of the value of the permission vector. Note that this determination need not necessarily depend on the value of Client X's permission vectors for the requested tag - in some embodiments, the fact that the requested tag does not match the tag assigned to the requested address can result in the denial of access, regardless of values of the client's permission vectors for either the tag assigned to the requested page or the requested tag.

It is worth repeating that the secure environment 200 of Fig. 2 and the secure memory access unit 300 of Fig. 3 are not mutually exclusive. Rather, Fig. 2 illustrates an arrangement of physical components in accordance with some embodiments, while Fig. 3 illustrates an arrangement of logical components, which can be (but are not limited to) components that are implemented by the physical components of Fig. 2. Merely by way of example, as noted, the access checker 325 can be implemented as functionality performed by the hardware or firmware circuitry 215 and/or 235 of Fig. 2, the secure client 305 can be implemented by software or firmware instructions 210 executing on a secure processor 205, etc. Similarly, as shown, the tag store 240 and permission store 245 are logical components that can be stored in the secure RAM 230 of the memory manager. Nonetheless, while the logical components of Fig. 3 can be implemented using the physical components of Fig. 2, embodiments are limited to neither of these exemplary arrangements but instead can be implemented by arrangements featuring components of either (or neither) of Fig. 2 or Fig. 3.

Merely by way of example, Fig. 4 illustrates a method 400 comprising several such operations that can be performed by various embodiments (including operations that can be performed by the secure environment 200, the secure memory access unit 300 and/or by physical or logical components thereof. In an aspect, some or all of these operations can be performed by logic (*e.g.,* circuitry 215 and/or instructions 210 executed by the secure processor 205) in the secure memory access unit 300 and/or components thereof, such as the access checker 325. In other embodiments, some or all of the operations might be performed by different components. The operations of method 400 are not limited performance by any particular physical or logical structure.

In some embodiments, the method 400 includes storing a plurality of tags (block 405). In an aspect, storing the tags can comprise storing each tag in a row of in a tag store, *e.g.,* 240. As noted above, each tag might be assigned to a particular memory page. In this way, certain embodiments can provide enhanced security using a low-latency determination of whether the client is permitted access to the requested page(s) using the tag(s) assigned to those page(s). In some respects, as described below, embodiments can assign a shared (or common) tag to all pages that remain unallocated in the system heap and assign page-specific tags to all allocated pages.

In particular embodiments, the tag store is stored in a secure RAM. As used herein, a "secure RAM" can be any RAM device that is capable of holding tag stores and/or permission stores in accordance with various embodiments and/or can be accessed only by components of the secure environment 200 and/or the secure memory access unit 300, *e.g.,* the secure client 305, the access checker 325, etc. In some cases, the secure RAM can be part of the secure environment 200. As illustrated, the on-chip RAM 230 of the memory manager 225 is a secure RAM. Alternatively and/or additionally, the secure environment 200 might comprise a secure RAM (not shown on Fig. 2) outside the memory manager 225, which can be used to store a page table and/or permission store.

In a particular aspect of some embodiments, the secure RAM is separate from the system DRAM 120 and/or can be accessed only by the memory manager circuitry 235 of the memory manager 225 and/or a secure client in the secure environment 200. In some embodiments, this configuration can provide enhanced security and performance, in that the secure RAM is directly accessible to the components that need to use it but inaccessible to all other components of the device 100. In some embodiments, the secure environment 200 includes logic (*e.g.,* instructions, hardware and/or firmware) that causes the secure client 305 to instruct the circuity 235 to store the tags in the tag store 240. In another aspect, the circuitry 235 itself includes functionality to actually insert the tags into entries (*e.g.,* 310) in the tag store 240 in the memory manager RAM 230. Thus, the operation of storing the tags can include the functionality of the secure client (instructing the circuitry 235), the functionality of the circuitry 235 (actually placing the tag in the RAM 230), or both.

As described above, the tag store might include a plurality of entries, each with a tag assigned to particular page of memory. In such cases, storing the tags can comprise assigning a particular tag to a particular page or pages. In an aspect, a secure client can assign the tag to a page or pages, and/or the secure client and the circuitry of the memory manager can perform operations to create or update appropriate entries in the tag store, as described above. As noted above, each tag can be used to implement a given set of access controls, which might be related to the data stored in the page, the client(s) authorized to access the page, etc., and assigning the tag can comprise selecting a tag with the appropriate access controls and marking the page(s) with that tag. In some embodiments, the secure client and/or memory manager circuitry can include logic to perform these operations.

The method 400 can also include storing permission vectors for some or all of the clients (and in, particular, the untrusted clients) in the device 100 and/or in components thereof. As noted above, in some embodiments, the permission vectors are stored in a permission store, which might also be stored in the secure RAM. A permission store can be any type of data structure that can store the permission vectors, *e.g.,* the permission store 245 described above. Also as noted above, in some embodiments a secure client can include logic to store the permission vectors through directing the memory manager circuitry to store the permission vectors in a secure RAM, while the circuitry, following that direction, actually might perform the act of physically storing the vectors in the RAM.

The method 400 can include receiving an access request from a client for access to one or more pages of memory (block 415). This access request might be received by the secure memory access unit 300, or a component thereof, such as the access checker 325, the secure client 305, etc. An access request can be any communication from a client (and, in particular, an untrusted client) that seeks to gain access to one or more pages of memory. An example of an access request can be a memory transaction command from a client. In some embodiments, the access request might comprise a client identifier that identifies the client. The client identifier can be any value that identifies the client to the device or a component thereof (*e.g.,* the memory manager, secure client, etc.), such as a process name or number, an arbitrary assigned value, an application name, to name a few examples; in some cases, this identifier can be unique within the device 100.

The access request might also include reference(s) to the memory page(s) the client seeks to access. In some embodiments, a single access request can include references to multiple pages the client seeks to access; in other embodiments, the client might be required to send a separate access request for each page it seeks. Still other embodiments can allow a client to use a single reference to request access to multiple pages. A reference to a memory page can include any information that allows the secure client and/or memory manager to identify the requested page. Merely by way of example, the reference might be physical or virtual address of the page and/or the like.

At block 420, the method 400 can comprise identifying the tag(s) assigned to the memory page(s) requested by the client. Merely by way of example, an access checker (or another component) might look up a tag assigned to each page requested by the client. Other techniques for identifying a tag are possible as well.

In some embodiments, the method 400 includes receiving a client identifier (block 425). As noted above, in many embodiments, the access request itself from the client will include a client identifier. In other embodiments, the client identifier might be provided other ways. As described below, in some cases, the client identifier and the identified tag for a page, without other information, can be used to determine whether the client has access to each requested page.

For instance, the method 400 can include receiving a requested tag from the client (block 430). As described in further detail below, determining whether the client is authorized to access a memory page can comprise comparing the requested tag to the tag assigned to the requested page. In some embodiments, the client can provide a requested tag as part of the access request (or as part of a different communication).

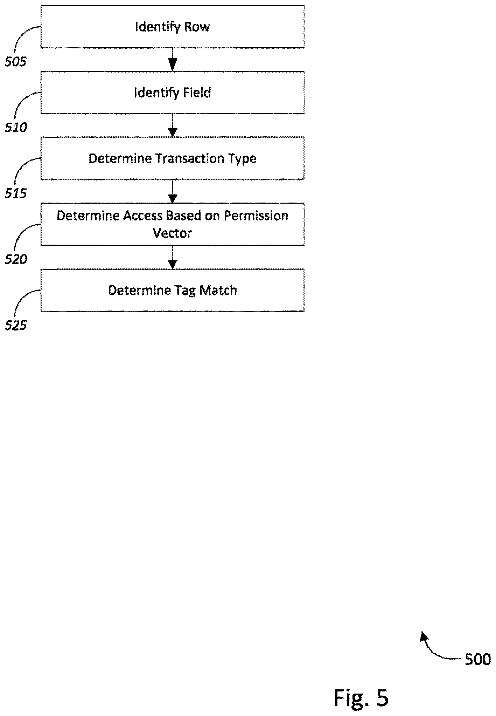

The method 400 can further comprise determining whether the client is authorized to access the requested memory page(s) (block 435). As noted above, this determination can be as simple as ensuring merely that the client is authorized to access the tag(s) assigned to the requested page(s). Alternatively and/or additionally, the determination can involve more involved evaluation, using various factors. Fig 5 illustrates a method comprising some exemplary operations (in addition or instead of simply determining that the client is authorized to access the tag assigned to a requested page) that can be used, in to determine whether a client is authorized to access a particular memory page.

In some embodiments, a permission vector can be used to determine whether the client is authorized to access the requested memory page. For example, at block 505, the method 500 can comprise identifying (*e.g.,* looking up in the permission store), a row corresponding to the tag assigned to the requested memory page. At block 510, the method 500 can comprise identifying a field in that row corresponding to a permission vector specifying whether the client has access to the requested memory page. In some, cases, as noted above, the permission store might include columns corresponding to multiple permission vectors for each client, *e.g.,* a read permission vector, a write permission vector, etc. At block 515, therefore, the method 500 might comprise determining a transaction type of the access request (*e.g.,* read, write, etc.). For instance, in some embodiments the access will specify the type of transaction for which the client is requesting access to the memory page, so the request itself can be used to determine the type of transaction. Thus, in some cases, identifying a field corresponding to the appropriate permission vector can comprise identifying a field corresponding to both the client and the type of the requested transaction. At block 520, the method 500 can comprise determining whether the client is authorized to access the requested memory page based on the value of the permission vector stored in the identified field (*e.g.,* allow access or deny access).

In some embodiments, the method 500 can comprise determining whether a requested tag provided by the client matches the tag assigned to the requested memory page (block 525) and determining whether the client is authorized to access the memory page can include whether the client is authorized to access the requested memory page based on whether the requested tag matches the first tag. In some embodiments, the requested tag matches the assigned tag if the values of each are identical. In other embodiments, the tags might be determined to match based on some relationship between the two tags. For example, the value of a matching requested tag might be derived from the tag assigned to the requested page, *e.g.,* via a hash algorithm, etc. In other cases, the relationship between a tag assigned to a requested page and the matching tag might be stored in a lookup table. Other types of relationships are possible as well. In such cases, determining whether the requested tag matches the tag assigned to the requested might include evaluating the two tags based on the relationship, *e.g.,* hashing the tag assigned to the requested page and comparing that hash value to the requested tag, looking up the tag for the assigned page in a lookup table and comparing the matching tag identified in the lookup table with the requested tag, etc. In any case, determining whether a requested tag matches the tag assigned to a requested page can provide an additional verification that the client is authorized to access the requested page(s). For instance, if a particular client might have access to a tag in some circumstances but not others, that access can be controlled by another process providing the client with matching requested tag only when it is appropriate for the client to access the requested memory page.

Returning to Fig. 4, the method 400 can include providing the client with access to the requested memory page(s) (block 440), based at least in part on a determination (*e.g.,* the determination made at block 435) that the client is authorized to access the memory page. In some embodiments, providing the client with access to the memory page(s) can be performed in a conventional manner once the foregoing authorization operations have been completed.

In some embodiments, the method 400 can include determining that the client (and/or all clients) have stopped using particular page(s) of memory (block 445). This determination can be made in a variety of ways. For example, a client might expressly deallocate a memory page when it is done using the page, providing an indication that the client has stopped using the page. In other cases, the device 100 (or any physical or logical component thereof) might determine that the client has stopped using the page when the client stops executing and/or (in the case of a software process) has been terminated. In some cases, *e.g.,* to avoid memory leaks, the device (and/or any component thereof) might determine, after a specified period of time has passed without any client attempting to access a page, that the client(s) have stopped using the page. In other embodiments, other considerations might be used to determine that a client or clients have stopped using a page of memory.

At block 450, the method 400 can include marking those unused pages with a new tag. Merely by way of example, noted above, embodiments might assign a common tag to all unallocated pages, and the pages that are no longer used can be marked with this tag, indicating that they have been returned to the heap and are available for future allocation. Other techniques for marking unused pages are possible as well.

### Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the implementations to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components, (including without limitation processors, other hardware circuitry, custom integrated circuits (ICs), programmable logic, etc.) and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods does not limit the implementations unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (*e.g.,* if used in combination with "either" or "only one of"). Moreover, the use of the term "Including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (*i.e.,* each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (*e.g.,* related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

## Claims

1. A device, comprising:
logic to store, in a secure random-access memory (RAM), a plurality of tags, each one of the plurality of tags being assigned to a different one of a plurality of memory pages in a system dynamic RAM (DRAM), the plurality of tags comprising a first tag assigned to a first memory page;
logic to receive an access request from a client for access to the first memory page;
logic to identify the first tag assigned to the first memory page;
logic to determine whether the client is authorized to access the first memory page; and
logic to provide the client with access to the memory page based at least in part on a determination that the client is authorized to access the memory page.

2. The device of claim 1, wherein
the client is an untrusted processor executing an operating system or application of the set-top box.

3. The device of claim 1 or 2, wherein
the client is an audio or video decoder; and/or
the client is a firmware or hardware client; and/or
the client is an untrusted client.

4. The device of any one of the preceding claims, further comprising
logic to assign the first tag to the first memory page.

5. The device of any one of the preceding claims, wherein
the logic to determine whether the client is authorized to access the first memory page comprises:
logic to determine whether the client is authorized to access the first memory page based at least in part on the first tag.

6. The device of claim 5, further comprising:
logic to store, in a permission store, a plurality of permission vectors,
the permission store comprising a plurality of rows,
each of the plurality of rows corresponding to one of the plurality of tags,
the plurality of rows comprising a first row corresponding to the first tag,
the first row comprising a plurality of fields storing one or more one or more permission vectors for each of a plurality of clients,
the plurality of fields comprising a first field storing a first permission vector for the client.

7. The device of claim 6, further comprising:
logic to receive a client identifier of the client; wherein the logic to determine whether the client is authorized to access the first memory page further comprises:
logic to identify the first row corresponding to the first tag;
logic to identify the first field storing the first permission vector for the client; and
logic to determine whether the client is authorized to access the first memory page, based at least in part on the first permission vector.

8. The device of claim 7, wherein:
the plurality of fields comprises a second field storing a second permission vector for the client;
the first permission vector corresponds to a first transaction type;
the second permission vector corresponds to a second transaction type; and
the logic to determine whether the client is authorized to access the first memory page further comprises:
logic to determine that a requested transaction related to the access request is of the first transaction type.

9. The device of any one of the preceding claims, further comprising:
logic to receive a requested tag from the client, the requested tag corresponding to the access request; and
logic to determine whether the requested tag matches the first tag; wherein the logic to determine whether the client is authorized to access the first memory page comprises
logic to determine whether the client is authorized to access the first memory page based on whether the requested tag matches the first tag.

10. The device of any one of the preceding claims, further comprising:
logic to determine that the client has stopped using the first page;
logic to mark the first page with a second tag; and
logic to return the first page to a system memory heap;
wherein in particular
the second tag is a shared tag applied to a plurality of unused memory pages.

11. The device of any one of the preceding claims, wherein
the device is a memory manager.

12. The device of any one of the preceding claims, wherein
the device is a system on a chip (SoC);
wherein in particular
the SoC comprises the secure RAM.

13. The device of any one of the preceding claims, wherein
the device is a set-top box.

14. The device of any one of the preceding claims, wherein
the first memory page is fragmented.

15. A method, comprising:
storing, in a secure random access (RAM), a plurality of tags, each one of the plurality of tags being assigned to a different one of a plurality of memory pages in a system dynamic RAM (DRAM), the plurality of tags comprising a first tag assigned to a first memory page;
receiving an access request from a client for access to the first memory page;
identifying the first tag assigned to the first memory page;
determining whether the client is authorized to access the first memory page; and
providing the client with access to the first memory page based at least in part on a determination that the client is authorized to access the first memory page.
